(19) **Europäisches Patentamt European Patent Office Office européen des brevets**

(11) **EP 4 768 279 A1**

(12) **EUROPEAN PATENT APPLICATION**

(43) Date of publication:
01.07.2026 Bulletin 2026/27

(21) Application number: 25167946.0

(22) Date of filing: 02.04.2025

(51) International Patent Classification (IPC):
*B60C 11/03* (2006.01)

(52) Cooperative Patent Classification (CPC):
**B60C 11/033; B60C 11/0306;** B60C 11/0318;
B60C 2011/0341; B60C 2011/0372; Y02T 10/86

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.12.2024 CN 202411986405

(71) Applicant: Aeolus Tyre Co., Ltd.
454003 Jiaozuo Henan (CN)

(72) Inventors:
• LIANG, Qianqing
Jiaozuo, Henan, 454003 (CN)
• WANG, Jianjun
Jiaozuo, Henan, 454003 (CN)
• ZHANG, Lingxin
Jiaozuo, Henan, 454003 (CN)
• LI, Yuanyuan
Jiaozuo, Henan, 454003 (CN)
• QI, Juntao
Jiaozuo, Henan, 454003 (CN)

(74) Representative: Cabinet Beau de Loménie
103, rue de Grenelle
75340 Paris Cedex 07 (FR)

(54) **TIRE COMPONENT AND TIRE**

(57) A tire component, comprising a tread portion and a tire body portion, wherein the tread portion comprises a wearable tread pattern and a tread rubber compound, wherein a value range of a pattern surface saturation "NG-100%" of the tread pattern distributed on a tread surface is 65% ≤ NG-100% ≤ 85%, the tread pattern comprises four grooves that are linearly distributed in a circumferential direction, in parallel and equidistantly: two middle grooves (111) distributed in a middle area and edge grooves (112) distributed on outer sides of the middle grooves. Compared with the prior art, the technical effect of the present invention is that through optimizing the design of the pattern grooves and the pattern saturation, the present invention can not only effectively reduce the aerodynamic noise, but also avoid the defects of cracks at the bottom of the pattern grooves and the deterioration of the rolling resistance performance.

Fig.2

**Description**

## TECHNICAL FIELD

The present invention mainly belongs to the technical fields such as the "tire manufacturing technical field", the "noise control technical field" and the "mechanical engineering field". Specifically, it relates to the technical field of heavy-duty vehicles, and particularly refers to tire components.

## BACKGROUND

A tire is an important component of a vehicle, and its performance directly affects driving safety and comfort of the vehicle. With improvement of EU label regulations, a noise level of the tire has become an important evaluation index. Therefore, reducing tire noise has become a research focus in a tire manufacturing industry.

Schemes of the prior art: existing technologies for reducing tire noise are mainly of two types: one is to adjust a pattern style to reduce aerodynamic noise and thus lower the noise level of the tire, such as increasing the types of pitches and optimizing a pitch arrangement; and the other is to change a natural vibration frequency of the tire to reduce an overall noise level of the tire, such as adding sound-absorbing cotton inside the tire.

Problems of the prior art: although the existing technologies can reduce the noise of the tire to a certain extent, while improving the noise level, these technologies more or less have negative impacts on other performances such as rolling resistance and durability. For example, a design of tortuous circumferential pattern grooves can reduce the aerodynamic noise, but it is likely to cause a defect such as cracks at bottoms of the pattern grooves, and may also indirectly cause deterioration of rolling resistance performance. In addition, although using a lower pattern saturation can reduce the noise of the tire, it also brings a negative impact of deteriorating the rolling resistance performance. Therefore, how to reduce the noise of the tire while avoiding the negative impacts on other performances has become a difficult problem faced by a current technology.

## SUMMARY

Technical problem to be solved by the present invention: how to design a tire component that can balance noise reduction, rolling resistance performance and anti-groove bottom performance, taking into account the two performances of noise reduction and rolling resistance performance.

The technical scheme of the present invention is specifically as follows:

A tire component, comprising a tread portion and a tire body portion, wherein the tread portion comprises a wearable tread pattern and a tread rubber compound, wherein
a value range of a pattern surface saturation "NG-100%" of the tread pattern distributed on a tread surface is $65\% \leq$ NG-100% $\leq 85\%$, the tread pattern comprises four grooves that are linearly distributed in a circumferential direction, in parallel and equidistantly: two middle grooves distributed in a middle area and edge grooves distributed on outer sides of the middle grooves;
oblique grooves are distributed between the two middle grooves, between the middle grooves and the edge grooves, and on outer sides of the edge grooves, the oblique grooves enable the middle grooves to be communicated with each other and enable the middle grooves to be communicated with the edge grooves; the oblique grooves on both sides of the middle grooves have a same inclination direction, that is, as the two oblique grooves gradually move away from the middle grooves, the two oblique grooves extend in a same direction; and for the edge grooves, the oblique grooves on both sides thereof have opposite inclination directions, that is, as the two oblique grooves gradually move away from the edge grooves, the two oblique grooves extend in opposite directions, respectively.

Optionally, one end of each of the oblique grooves between the middle grooves and the edge grooves, and one end of each of the oblique grooves on outer sides of the edge grooves are all in a three-pronged shape, comprising a main prong in a middle part and auxiliary prongs on both sides, and the auxiliary prongs are also communicated with the grooves.

Optionally, in the oblique grooves between the middle grooves and the edge grooves, three-pronged shape ends of two adjacent oblique grooves are distributed in opposite directions; and
three-pronged shape ends of the oblique grooves distributed on the outer sides of the edge grooves are all located on sides close to the edge grooves.

Optionally, in the oblique grooves between the two middle grooves, two adjacent oblique grooves are communicated with each other through a connecting groove; and for a same oblique groove, connection points of the same oblique groove with two connecting grooves are not at the same position.

Optionally, the grooves comprise basic grooves, left groove walls of the basic grooves expand outward to form left groove expansion areas, and right groove walls of the basic grooves expand outward to form right groove expansion areas;

a left groove expansion area and a right groove expansion area are distributed on a groove between two adjacent oblique grooves, and

when a groove wall of each of the basic grooves expands outward to form the left groove expansion area or the right groove expansion area, one direction thereof is a rapid expansion area, and the other direction is a slow expansion area, distribution directions of the rapid expansion areas and the slow expansion areas of all the left groove expansion areas are the same, and distribution directions of the rapid expansion areas and the slow expansion areas of all the right groove expansion areas are also the same, and a distribution direction of the rapid expansion areas of the right groove expansion areas is opposite to that of the left groove expansion areas.

Optionally, areas are distributed on groove bottoms of part of the oblique grooves; within one pitch, the number of the oblique grooves provided with the uneven areas does not exceed 80% of a total number of the oblique grooves; and a distribution density of the "oblique grooves provided with the uneven areas " at a center of the tread is greater than that at other positions; and

each of the uneven areas comprises a plurality of uneven units; the uneven units are integrally distributed in a shape of a regular polygon, comprising concave units and convex units distributed alternately; both the concave units and the convex units are all located at vertices of the regular polygon.

Optionally, surfaces of both the concave units and the convex units are part of a spherical surface, and a radius thereof ranges from 2 mm to 4 mm;

a thickness of the tread rubber compound ranges from 10 mm to 21 mm;

a bottom of a radial cross-section of each of the grooves is in a shape of an arc with a radian greater than or equal to 2;

a width of each of the middle grooves is 1.2 times to 2.3 times a width of each of the edge groove, an included angle between each of the oblique grooves and each of the middle grooves is between 10° and 85°, and a depth of each of the oblique grooves is between 0 mm and 2 mm;

a bevel angle of each of the grooves varies within a range of 10° to 30°;

$$70\% \leq \text{NG-}100\% \leq 80\%;$$

a belt layer structure is disposed inside the tire body portion, the belt layer structure is in an internal structure of the tire to change a natural vibration frequency of the tire; and specifically, the belt layer structure comprises four layers with gradually decreasing widths from inside to outside: a first layer, a second layer, a third layer, and a fourth layer, wherein a steel wire unit of a certain layer comprises a main steel wire and an auxiliary steel wire, the main steel wire is arranged straight, and the auxiliary steel wire is spirally wound outside the main steel wire, and a spiral angle range of the auxiliary steel wire is from 0° to 2°.

Optionally, the NG-100% is within a range of 76% ± 3%; and

the spiral angle range of the auxiliary steel wire is from 0° to 1.5°.

The invention also relates to a tire which is applied to a heavy-duty vehicle, wherein the tire comprises the tire component of the invention.

Optionally, pitches of the tire comprise a longer pitch L and a shorter pitch S, and an L/S proportional coefficient is between 1.0 and 1.15;

a pitch arrangement sequence is SLLLL-LSLLL-LLSLL-SSSLS-SSSSL-SSSSS-LS; and a chip is implanted in the tire to real-timely monitor a temperature and pressure of the tire in a running status during a driving process of a vehicle; and a tire contact patch is adjusted by controlling tire pressure.

Compared with the prior art, the technical effect of the present invention is that through optimizing the design of the pattern grooves and the pattern saturation, the present invention can not only effectively reduce the aerodynamic noise, but also avoid the defects of cracks at the bottom of the pattern grooves and the deterioration of the rolling resistance performance.

**BRIEF DESCRIPTION OF THE DRAWINGS**

FIG.1 is a schematic cross-sectional view of the tire component of the present invention.

FIG. 2 is a schematic top view of the tire component of the present invention.

FIG. 3 is a schematic cross-sectional view of a tread portion.

FIG. 4 is a schematic diagram of a belt layer structure.

FIG. 5 is a schematic top view of a single groove.

FIG. 6 is a schematic top view of an oblique groove.

FIG. 7 is a schematic top view of a bottom of an oblique groove.

FIG. 8 is a schematic top view of four grooves.

FIG. 9 is a schematic cross-sectional view of a single groove.

FIG. 10 is a schematic three-dimensional view of the present invention.

FIG. 11 is an enlarged schematic view of the oblique groove.

FIG. 12 is a schematic diagram of a single group of steel wires of a steel wire in a third layer.

## DESCRIPTION OF THE EMBODIMENTS

The present invention is described in detail below in conjunction with accompanying drawings and its specific embodiments.

In this specification, a tire component is a part of a tire. Specifically, it refers to the part cut off from the tire by dividing the tire with two "cross-sections passing through a tire axis".

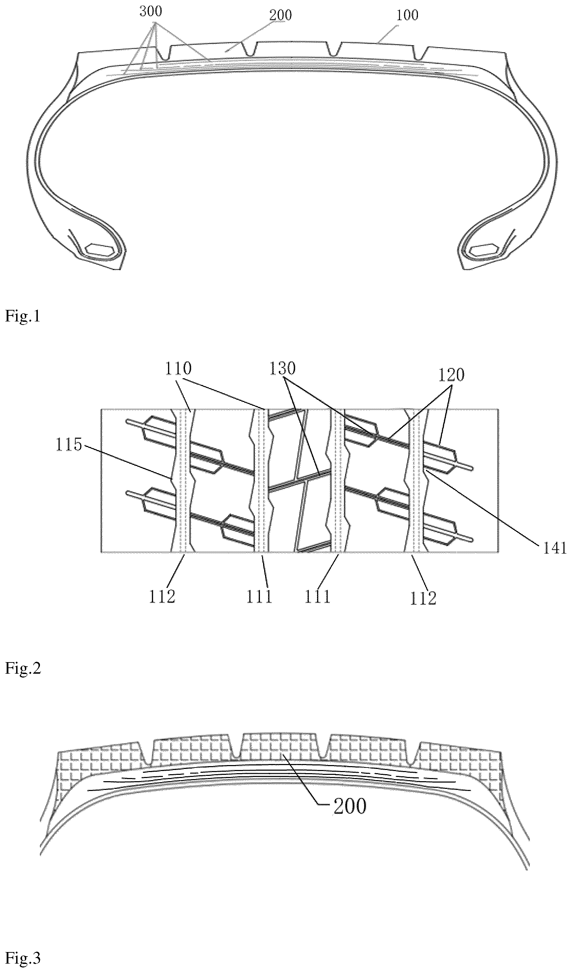

As shown in FIG. 1, a tire component, which is applied to a heavy-duty vehicle, comprises a tread portion and a tire body portion, wherein the tread portion comprises a wearable tread pattern 100 and a tread rubber compound 200, and a belt layer structure 300 is disposed inside the tire body portion.

As shown in FIG. 1 and FIG. 2, a value range of a pattern surface saturation (NG-100%) of the tread pattern 100 distributed on a tread surface is $65\% \le NG\text{-}100\% \le 85\%$. It can even be $70\% \le NG\text{-}100\% \le 80\%$. Furthermore, $76\% \pm 3\%$ is particularly optimal.

As shown in FIG. 2, the tread pattern 100 comprises four grooves that are linearly distributed in a circumferential direction, in parallel and equidistantly: two middle grooves 111 distributed in a middle area and edge grooves 112 distributed on outer sides of the middle grooves 111.

A bottom of a radial cross-section of each of the grooves is in a shape of an arc with a radian greater than or equal to 2.

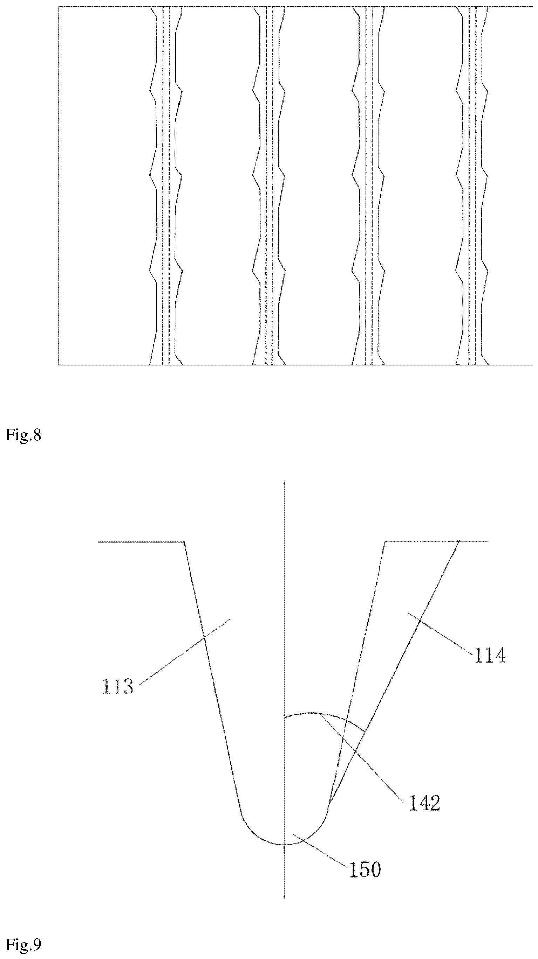

As shown in FIG. 9, a bevel angle 142 of each of the groove varies within a range of 10° to 30°.

As shown in FIG. 2, oblique grooves 120 are distributed between the two middle grooves 111, between the middle grooves 111 and the edge grooves 112, and on outer sides of the edge grooves 112, the oblique grooves 120 enable the middle grooves 111 to be communicated with each other and enable the middle grooves 111 to be communicated with the edge grooves 112; the oblique grooves 120 on both sides of the middle grooves 111 have a same inclination direction, that is, as the two oblique grooves gradually move away from the middle grooves 111, the two oblique grooves 120 extend in a same direction (as shown in FIG. 2, both are upward or both are downward); and for the edge grooves 112, the oblique grooves 120 on both sides thereof have opposite inclination directions, that is, as the two oblique grooves gradually move away from the edge grooves 112, the two oblique grooves 120 extend in opposite directions respectively (as shown in FIG. 2, one is upward and the other is downward).

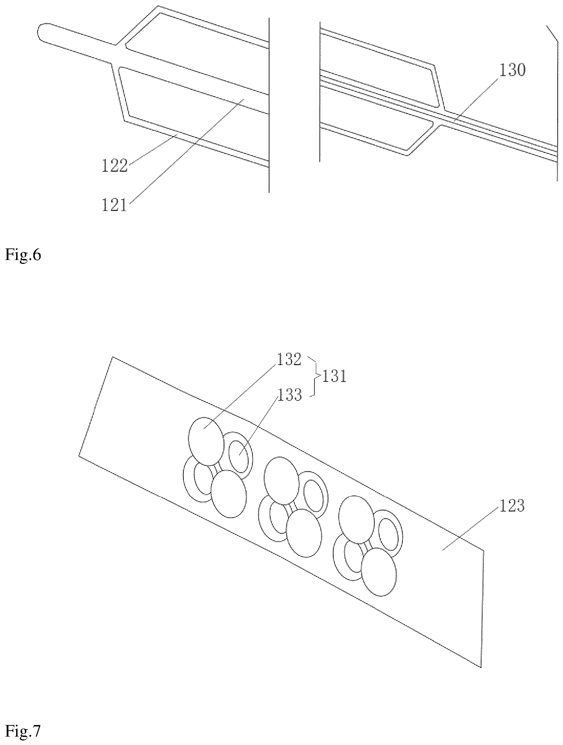

As shown FIG. 6, one end of each of the oblique grooves 120 between the middle grooves 111 and the edge grooves 112 and one end of each of the oblique grooves 120 on outer sides of the edge grooves 112 are all in a three-pronged shape, comprising a main prong 121 in a middle part and auxiliary prongs 122 on both sides, and the auxiliary prongs 122 are also communicated with the grooves.

As shown in FIG. 2, in the oblique grooves 120 between the middle grooves 111 and the edge grooves 112, three-pronged shape ends of two adjacent oblique grooves 120 are distributed in opposite directions (as shown in FIG. 2, one is on a left side and the other is on a right side).

As shown in FIG. 2, the three-pronged shape ends of the oblique grooves 120 distributed on the outer sides of the edge grooves 112 are all located on sides close to the edge grooves 112.

As shown in FIG. 2, in the oblique grooves 120 between the two middle grooves 111, two adjacent oblique grooves 120 are communicated with each other through a connecting groove 170; and for the same oblique groove 120, connection points of the same oblique groove with two connecting grooves 170 are not at the same position.

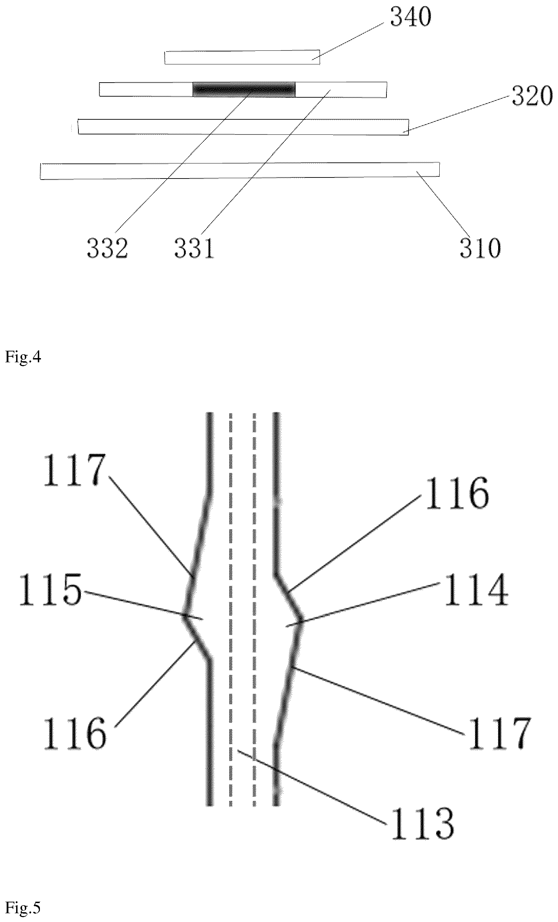

As shown in FIG. 5, the grooves comprise basic grooves 113, left groove walls of the basic grooves 113 expand outward to form left groove expansion areas 115, and right groove walls of the basic grooves expand outward to form right groove expansion areas 114.

As shown in FIG. 2, a left groove expansion area 115 and a right groove expansion area 114 are distributed on a groove between two adjacent oblique grooves 120.

As shown in FIG. 5, when a groove wall of each of the basic grooves 113 expands outward to form the left groove expansion area 115 or the right groove expansion area 114, one direction thereof is a rapid expansion area 16, and the other direction is a slow expansion area 17, distribution directions of the rapid expansion areas 16 and the slow expansion areas 17 of all the left groove expansion areas 115 are the same (as shown in FIG. 2, the distribution direction of the rapid expansion areas 16 is at the bottom, and the distribution direction of the rapid expansion area 16 is at the top), and distribution directions of the rapid expansion areas 16 and the slow expansion areas 17 of all the right groove expansion areas 114 are also the same, and a distribution direction of the rapid expansion areas 16 of the right groove expansion areas 114 is opposite to that of the left groove expansion areas 115.

In this way, it not only ensures a uniform stress at the bottom of the grooves, but also guarantees tortuosity of the pattern surface, eliminating the aerodynamic noise to a greatest extent.

As shown in FIG. 7, uneven areas 130 are distributed on groove bottoms 123 of part of the oblique grooves 120; within one pitch, the number of the oblique grooves 120 provided with the uneven areas 130 does not exceed 80% of a total number of the oblique grooves 120; and a distribution density of the "oblique grooves 120 provided with the uneven areas 130" at a center of the tread is greater than that at other positions.

As shown in FIG. 7, each of the uneven areas 130 comprises a plurality of uneven units 131; the uneven units 131 are integrally distributed in a shape of a regular polygon, comprising concave units 133 and convex units 132 distributed alternately; both the concave units 133 and the convex units 132 are all located at vertices of the regular polygon.

As shown in FIG. 7, surfaces of both the concave units 133 and the convex units 132 are part of a spherical surface, and a radius thereof ranges from 2 mm to 4 mm.

A thickness of the tread rubber compound ranges from 10 mm to 21 mm.

A width of each of the middle grooves 111 is 1.2 times to 2.3 times a width of each of the edge grooves 112, an included angle 141 between each of the oblique grooves 120 and each of the middle grooves 111 is between 10° and 85°, and a depth of each of the oblique grooves 120 is between 0 mm and 2 mm. A test has shown that this pattern can significantly and effectively reduce the noise of new tires without deteriorating the rolling resistance performance.

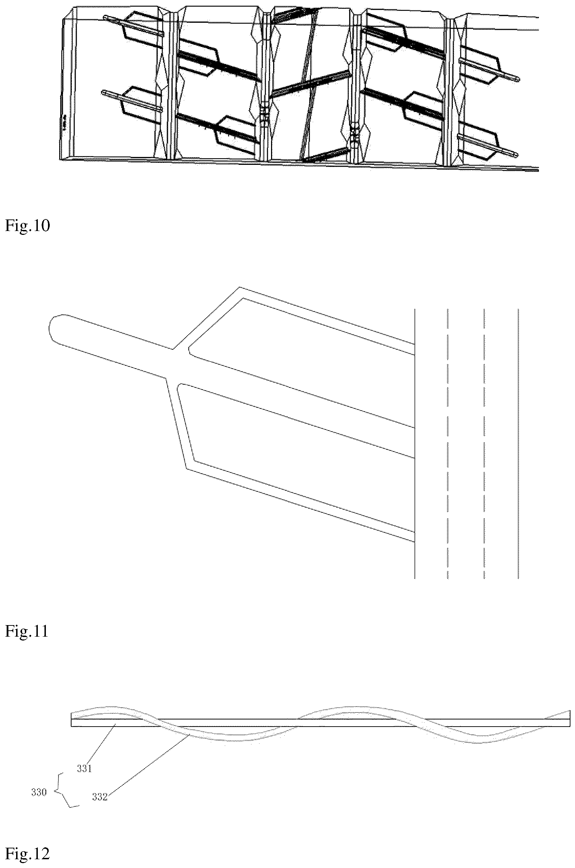

As shown in FIG. 4 and FIG. 12, in order to change the natural vibration frequency of the tire, the belt layer structure is in an internal structure of the tire to change a natural vibration frequency of the tire; and specifically, the belt layer structure 300 comprises four layers with gradually decreasing widths from the inside to the outside: a first layer 310, a second layer 320, a third layer 330, and a fourth layer 340, wherein a steel wire unit of a certain layer comprises a main steel wire 331 and an auxiliary steel wire 332, the main steel wire 331 is arranged straight, and the auxiliary steel wire 332 is spirally wound outside the main steel wire 331, and a spiral angle range of the auxiliary steel wire is from 0° to 2°, and preferably from 0° to 1.5°. Through such a design, the vibration frequency of the tire may be changed, thereby reducing the overall noise level of the tire, while not reducing the durability and rolling resistance performance of the tire.

In order to reduce the aerodynamic noise, a double-pitch design is adopted, in which one pitch is used to reduce the noise and the other pitch is used to maintain the rolling resistance performance.

Specifically, for a tire, a longer pitch L and a shorter pitch S may be selected, and an L/S ratio coefficient is controlled to be between 1.05 and 1.15. A pitch arrangement sequence is SLLLL-LSLLL-LLSLL-SSSLS-SSSSL-SSSSS-LS. This sequence is obtained by using a computer program compiled based on accumulated designs of historical products. It has been continuously optimized for more than 1,000 times until a set energy target is achieved, forming a final alternating arrangement sequence. Through such a design, the tire noise may be effectively reduced without affecting the rolling resistance performance. This method has been verified in existing products, as shown in the following table: Taking an existing product 385/65R22.5 as an example, the noise coefficient is reduced to 51% after optimization.

| | Pitch arrangement sequence case | Energy value | Noise coefficient |
| --- | --- | --- | --- |
| Before optimization | LSSLS-SSSSL-SSSSS-LSSLL-LSLSL-LLLSL-LL | 2248.517 | 100% |
| After optimization | SLLLL-LSLLL-LLSLL-SSSLS-SSSSL-SSSSS-LS | 1145.871 | 51% |

Our company has found through research that there is a linear relationship between the tire contact patch and noise reduction within a certain range. Therefore, the following improvements have been made: A chip is implanted in the tire to real-timely monitor a temperature and pressure of the tire in a running status during a driving process of a vehicle; and a tire contact patch is adjusted by controlling tire pressure. Thus, the noise level is indirectly and dynamically controlled. Through such dynamic adjustment, the tire noise may be further reduced on a premise of not affecting other performances such as the rolling resistance and durability.

In order to reduce the noise, a low-noise rubber material is selected for the rubber to reduce a frictional noise between the tire and the ground.

Through such optimization, the tire noise is effectively reduced on the premise of not affecting other performances such as the rolling resistance and durability. A preferred tread formula material in the present invention has an E' value range controlled between 2.6 and 7.8 under a condition of 70°C, a frequency of 10 Hz and a stress of 0.075. More preferably, it is better controlled between 4.5 and 5.5.

A tanδ range is required to be between 0.11 and 0.19 at 70°C and a frequency of 10 Hz.

Application prospects of this technology: due to advancement of this technical scheme, it can be widely applied in application fields such as the tire manufacturing technology field, the noise control technology field, and the mechanical engineering field. Firstly, in the tire manufacturing technology field, this technical scheme can effectively reduce the tire noise and avoid negative impacts on the rolling resistance and anti-groove bottom cracking performance by optimizing the pattern style and arrangement. This design concept of balancing performance is of great significance for improving comprehensive performance of the tire. In addition, this technical scheme may also provide a new technical route for a tire manufacturer to meet challenges brought by the improvement of EU label regulations. Secondly, in the field of noise control technology, this technical scheme provides a new noise control idea, that is, to reduce the aerodynamic noise by optimizing the pattern style and arrangement, rather than simply relying on adding materials such as sound-absorbing cotton. This active noise control method has higher efficiency and better effects compared with a passive noise control method, and is expected to be widely applied in the field of noise control technology. Finally, in the field of mechanical engineering, research and application of this technical scheme is also of great significance for improving operating efficiency and safety of a mechanical equipment. For example, in fields such as construction machinery and agricultural machinery, reducing a noise level of equipment can not only improve operating efficiency of the equipment, but also reduce impacts of the equipment on the environment and enhance comfort of using the equipment. In general, this technical scheme has broad application prospects and large market demand, and is expected to play an important role in a plurality of fields.

Features of this application:

S1: the tread pattern design is optimized: by optimizing the tread pattern design, such as increasing the types of pitches and optimizing the pitch arrangement, the aerodynamic noise is reduced, thereby lowering the noise level of the tire. Through such optimization, the tire noise may be effectively reduced on the premise of not affecting other performances such as the rolling resistance and durability.

S2: the natural vibration frequency of the tire is changed: by changing the internal structure of the tire, such as adding sound-absorbing cotton, the natural vibration frequency of the tire is changed, and then the overall noise level of the tire is reduced. Through such change, the tire noise is effectively reduced on the premise of not affecting other performances such as the rolling resistance and durability.

S3: a plurality of noise reduction techniques is comprehensively applied: by comprehensively applying the above two technical means, it is possible to not only reduce the aerodynamic noise through the optimized pattern design, but also lower the overall noise of the tire by changing the natural vibration frequency of the tire, so that the tire noise can be effectively reduced without affecting other performances such as the rolling resistance and durability.

S4: during the driving process of the vehicle, the operating state of the tire is monitored in real time, and the pattern design is dynamically adjusted according to the operating state, such as dynamically adjustment of the types of pitches and the pitch arrangement, to further reduce the tire noise. Through such dynamic adjustment, the tire noise is effectively reduced on the premise of not affecting other performances such as the rolling resistance and durability.

S5: by optimizing the tire material, such as adopting a low-noise rubber formulation, the tire noise may be further reduced. Through such optimization, the tire noise may be effectively reduced on the premise of not affecting other performances such as the rolling resistance and durability.

S6: the present invention proposes a novel tire noise reduction technology and through optimizing the design of the pattern grooves and the pattern saturation, the present invention can not only effectively reduce the aerodynamic noise, but also avoid the defects of cracks at the bottom of the pattern grooves and the deterioration of the rolling resistance performance. This technical scheme, while reducing the tire noise, avoids having a negative impact on other performances, achieving dual goals of noise reduction and performance optimization.

S7: the technical scheme of the present invention can not only reduce the tire noise but also improve the durability of the tire. By optimizing the design of the tread grooves and the tread pattern saturation, stress concentration at the bottom of the tread grooves can be reduced, thus prolonging the service life of the tire.

S8: the technical scheme of the present invention has broad application prospects in terms of reducing the tire noise. Whether for the production of new tires or the modification of existing tires, the technical scheme of the present invention can be adopted to achieve the reduction of the tire noise and the improvement of the performance.

S9: the technical scheme of the present invention has high cost-effectiveness in reducing the tire noise. Compared with the existing technologies, the technical scheme of the present invention can achieve the reduction of the tire noise and the improvement of the performance without adding complex manufacturing processes or expensive materials, so it has high cost-effectiveness in practical applications.

S10: the technical scheme of the present invention has good environmental benefits in reducing the tire noise. By reducing the tire noise, noise pollution to the environment during the driving process of the vehicle can be reduced, which has positive environmental protection significance.

For other contents, please refer to the prior art.

The above are only the preferred embodiments of the present invention. It should be pointed out that for those skilled in the art, without departing from the overall concept of the present invention, several changes and improvements can still be made, and these should also be regarded as falling within the protection scope of the present invention.

**Claims**

1. A tire component, comprising a tread portion and a tire body portion, wherein the tread portion comprises a wearable tread pattern (100) and a tread rubber compound (200), wherein

    a value range of a pattern surface saturation "NG-100%" of the tread pattern (100) distributed on a tread surface is 65% ≤ NG-100% ≤ 85%, the tread pattern (100) comprises four grooves that are linearly distributed in a circumferential direction, in parallel and equidistantly: two middle grooves (111) distributed in a middle area and edge grooves (112) distributed on outer sides of the middle grooves (111);
    oblique grooves (120) are distributed between the two middle grooves (111), between the middle grooves (111) and the edge grooves (112), and on outer sides of the edge grooves (112), the oblique grooves (120) enable the middle grooves (111) to be communicated with each other and enable the middle grooves (111) to be communicated with the edge grooves (112); the oblique grooves (120) on both sides of the middle grooves (111) have a same inclination direction, that is, as the two oblique grooves gradually move away from the middle grooves (111), the two oblique grooves (120) extend in a same direction; and for the edge grooves (112), the oblique grooves (120) on both sides thereof have opposite inclination directions, that is, as the two oblique grooves gradually move away from the edge grooves (112), the two oblique grooves (120) extend in opposite directions, respectively.

2. The tire component according to claim 1, wherein one end of each of the oblique grooves (120) between the middle grooves (111) and the edge grooves (112), and one end of each of the oblique grooves (120) on outer sides of the edge grooves (112) are all in a three-pronged shape, comprising a main prong (121) in a middle part and auxiliary prongs (122) on both sides, and the auxiliary prongs (122) are also communicated with the grooves.

3. The tire component according to claim 2, wherein in the oblique grooves (120) between the middle grooves (111) and the edge grooves (112), three-pronged shape ends of two adjacent oblique grooves (120) are distributed in opposite directions; and
    three-pronged shape ends of the oblique grooves (120) distributed on the outer sides of the edge grooves (112) are all located on sides close to the edge grooves (112).

4. The tire component according to claim 3, wherein in the oblique grooves (120) between the two middle grooves (111), two adjacent oblique grooves (120) are communicated with each other through a connecting groove (170); and for a same oblique groove (120), connection points of the same oblique groove with two connecting grooves (170) are not at the same position.

5. The tire component according to claim 4, wherein the grooves comprise basic grooves (113), left groove walls of the basic grooves (113) expand outward to form left groove expansion areas (115), and right groove walls of the basic grooves expand outward to form right groove expansion areas (114);

    a left groove expansion area (115) and a right groove expansion area (114) are distributed on a groove between two adjacent oblique grooves (120), and
    when a groove wall of each of the basic grooves (113) expands outward to form the left groove expansion area (115) or the right groove expansion area (114), one direction thereof is a rapid expansion area (16), and the other direction is a slow expansion area (17), distribution directions of the rapid expansion areas (16) and the slow expansion areas (17) of all the left groove expansion areas (115) are the same, and distribution directions of the rapid expansion areas (16) and the slow expansion areas (17) of all the right groove expansion areas (114) are also the same, and a distribution direction of the rapid expansion areas (16) of the right groove expansion areas (114) is opposite to that of the left groove expansion areas (115).

6. The tire component according to claim 5, wherein areas (130) are distributed on groove bottoms (123) of part of the oblique grooves (120); within one pitch, the number of the oblique grooves (120) provided with the uneven areas (130) does not exceed 80% of a total number of the oblique grooves (120); and a distribution density of the "oblique grooves (120) provided with the uneven areas (130)" at a center of the tread is greater than that at other positions; and each of the uneven areas (130) comprises a plurality of uneven units (131); the uneven units (131) are integrally distributed in a shape of a regular polygon, comprising concave units (133) and convex units (132) distributed alternately; both the concave units (133) and the convex units (132) are all located at vertices of the regular polygon.

7. The tire component according to claim 6, wherein surfaces of both the concave units (133) and the convex units (132) are part of a spherical surface, and a radius thereof ranges from 2 mm to 4 mm;

a thickness of the tread rubber compound ranges from 10 mm to 21 mm;
a bottom of a radial cross-section of each of the grooves is in a shape of an arc with a radian greater than or equal to 2;
a width of each of the middle grooves (111) is 1.2 times to 2.3 times a width of each of the edge groove (112), an included angle between each of the oblique grooves (120) and each of the middle grooves (111) is between 10° and 85°, and a depth of each of the oblique grooves (120) is between 0 mm and 2 mm;
a bevel angle of each of the grooves varies within a range of 10° to 30°;

$$70\% \leq NG\text{-}100\% \leq 80\%;$$

a belt layer structure (300) is disposed inside the tire body portion, the belt layer structure is in an internal structure of the tire to change a natural vibration frequency of the tire; and specifically, the belt layer structure (300) comprises four layers with gradually decreasing widths from inside to outside: a first layer (310), a second layer (320), a third layer (330), and a fourth layer (340), wherein a steel wire unit of a certain layer comprises a main steel wire (331) and an auxiliary steel wire (332), the main steel wire (331) is arranged straight, and the auxiliary steel wire (332) is spirally wound outside the main steel wire (331), and a spiral angle range of the auxiliary steel wire (332) is from 0° to 2°.

8. The tire component according to claim 7, wherein the NG-100% is within a range of 76% ± 3%; and
the spiral angle range of the auxiliary steel wire (332) is from 0° to 1.5°.

9. A tire which is applied to a heavy-duty vehicle, wherein the tire comprises the tire component according to any claims 1 to 8.

10. The tire according to claim 9, wherein pitches of the tire comprise a longer pitch L and a shorter pitch S, and an L/S proportional coefficient is between 1.0 and 1.15;

a pitch arrangement sequence is SLLLL-LSLLL-LLSLL-SSSLS-SSSSL-SSSSS-LS; and
a chip is implanted in the tire to real-timely monitor a temperature and pressure of the tire in a running status during a driving process of a vehicle; and a tire contact patch is adjusted by controlling tire pressure.

Fig.1

Fig.2

Fig.3

Fig.4

Fig.5

Fig.6

Fig.7

Fig.8

Fig.9

Fig.10

Fig.11

Fig.12

Europäisches
Patentamt

European
Patent Office

Office européen
des brevets

# EUROPEAN SEARCH REPORT

**Application Number**

EP 25 16 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 214 001 210 U (BEIJING XINGJUN FUTURE AUTOMOBILE TECH CO LTD) 20 August 2021 (2021-08-20) | 1,9 | INV. B60C11/03 |
| A | * see par. [0030] of the enclosed translation of the description; figure 1 * | 2-8,10 | |
| X | US 5 660 651 A (DIENSTHUBER FRANZ [AT]) 26 August 1997 (1997-08-26) | 1,9 | |
| A | * column 5, line 6 - column 5, line 14; figures 1,2 * | 2-8,10 | |
| X | US 2016/303919 A1 (YAMAOKA HIROSHI [JP]) 20 October 2016 (2016-10-20) | 1,9 | |
| Y | * paragraph [0014] - paragraph [0105]; | 1,9 | |
| A | figures 1-8 * | 2-8,10 | |
| X | US 2018/147891 A1 (TAKAHASHI HISASHI [JP]) 31 May 2018 (2018-05-31) | 1,9 | |
| Y | * paragraph [0019] - paragraph [0065]; | 1,9 | TECHNICAL FIELDS SEARCHED (IPC) |
| A | figures 1,2,4,5A-5E * | 2-8,10 | |
| X | JP H03 136908 A (BRIDGESTONE CORP) 11 June 1991 (1991-06-11) | 1,9 | B60C |
| Y | * see the enclosed translation referring | 1,9 | |
| A | the embodiment according to fig. 3; figure 3 * | 2-8,10 | |
| X | US 2022/063345 A1 (FUNASE NATSUMI [JP] ET AL) 3 March 2022 (2022-03-03) | 1,9 | |
| Y | * paragraph [0003] - paragraph [0196]; | 1,9 | |
| A | figures 1-10 * | 2-8,10 | |
| Y | DE 101 28 592 A1 (GOODYEAR TIRE & RUBBER [US]) 20 December 2001 (2001-12-20) | 1,9 | |
| A | * figure 2 * | 2-8,10 | |

-/--

The present search report has been drawn up for all claims

| Place of search | Date of completion of the search | Examiner |
|---|---|---|
| Munich | 29 August 2025 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (IPC) |
| Y | CN 214 727 963 U (QINGDAO DOUBLESTAR TIRE IND CO LTD) 16 November 2021 (2021-11-16) | 1,9 | |
| A | * see par. [0042] of the enclosed translation * ----- | 2-8,10 | |
| A | CN 221 315 669 U (HEFEI WANLI TIRE CO LTD) 12 July 2024 (2024-07-12) * see par. [0021] of the enclosed translation of the description; figures * ----- | 1-10 | |
| | | | TECHNICAL FIELDS SEARCHED (IPC) |

The present search report has been drawn up for all claims

| Place of search | Date of completion of the search | Examiner |
|---|---|---|
| Munich | 29 August 2025 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7946

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | | Publication date |
|---|---|---|---|---|---|
| CN 214001210 | U | 20-08-2021 | NONE | | |
| US 5660651 | A | 26-08-1997 | AT | 402178 B | 25-02-1997 |
| | | | AT | E156428 T1 | 15-08-1997 |
| | | | EP | 0669216 A1 | 30-08-1995 |
| | | | JP | 2723479 B2 | 09-03-1998 |
| | | | JP | H07257113 A | 09-10-1995 |
| | | | US | 5660651 A | 26-08-1997 |
| US 2016303919 | A1 | 20-10-2016 | CN | 106042785 A | 26-10-2016 |
| | | | EP | 3081398 A1 | 19-10-2016 |
| | | | JP | 6405284 B2 | 17-10-2018 |
| | | | JP | 2016203703 A | 08-12-2016 |
| | | | US | 2016303919 A1 | 20-10-2016 |
| US 2018147891 | A1 | 31-05-2018 | CN | 108116167 A | 05-06-2018 |
| | | | EP | 3326839 A1 | 30-05-2018 |
| | | | EP | 3693189 A1 | 12-08-2020 |
| | | | US | 2018147891 A1 | 31-05-2018 |
| JP H03136908 | A | 11-06-1991 | NONE | | |
| US 2022063345 | A1 | 03-03-2022 | CN | 114103557 A | 01-03-2022 |
| | | | EP | 3960504 A1 | 02-03-2022 |
| | | | JP | 7547870 B2 | 10-09-2024 |
| | | | JP | 2022040966 A | 11-03-2022 |
| | | | US | 2022063345 A1 | 03-03-2022 |
| DE 10128592 | A1 | 20-12-2001 | BR | 0102297 A | 13-02-2002 |
| | | | DE | 10128592 A1 | 20-12-2001 |
| | | | US | 6439285 B1 | 27-08-2002 |
| CN 214727963 | U | 16-11-2021 | NONE | | |
| CN 221315669 | U | 12-07-2024 | NONE | | |

EPO FORM P0459

For more details about this annex : see Official Journal of the European Patent Office, No. 12/82